# EUROPEAN PATENT APPLICATION

(11) **EP 2 352 319 A1**
(43) Date of publication of application: **03.08.2011**
(21) Application number: 09824842.0
(22) Date of filing: 06.11.2009
(51) Int. Cl.: H04W 4/22, H04M 11/04, H04W 60/00, H04W 84/10

(54) **MOBILE UNIT COMMUNICATION SYSTEM, AREA MANAGEMENT DEVICE, COMMUNICATION CONTROL DEVICE AND COMMUNICATION METHOD**

(30) Priority: 06.11.2008 JP 2008285817
(71) Applicant: NTT DOCOMO, INC., Chiyoda-ku Tokyo 100-6150 (JP)
(72) Inventor: ISOBE, Shin-ichi, Tokyo 100-6150 (JP); ENDOH, Eisuke, Tokyo 100-6150 (JP)
(74) Representative: HOFFMANN EITLE
(86) International application number: PCT/JP2009/068955
(87) International publication number: WO 2010/053143

(57) **Abstract**

A communication control device 50 determines an area A1 corresponding to the small area identifier by making an inquiry to a located area management device 40 about the ordinary area identifier associated with the small area identifier, based on the small area identifier contained in the emergency call, upon receipt of the emergency call from the mobile terminal 10 located in an area A2. The communication control device 50 acquires an emergency report destination device 70 associated with the area A1 determined, and to connect the emergency call to the emergency report destination device 70.

## Description

### TECHNICAL FIELD

The present invention relates to a mobile communication system configured to control an emergency report destination to which an emergency call from a mobile terminal is to be connected, and also relates to a located area management device, a communication control device and a communication method which are used in the mobile communication system.

### BACKGROUND ART

Conventionally, in a mobile communication system typified by a cellular phone system, when a mobile terminal sends an emergency call to the police (110) or fire department (119), a connection destination of the emergency call is determined according to an area in which the mobile terminal is located at the time when the emergency call is sent (see, e.g., Patent Document 1).

Specifically, a communication control device included in the mobile communication system connects the emergency call to an emergency report destination (e.g., a command information center of the fire department) which is the closest to a radio base station or cell registered by the mobile terminal for its location, based on the radio base station or cell.

### PRIOR ART DOCUMENT

### PATENT DOCUMENT

PATENT DOCUMENT 1: Japanese Patent Application Publication No. Hei 11-234727 (pp. 3-4)

### SUMMARY OF THE INVENTION

In the mobile communication system such as the cellular phone system, a small radio base station, a so-called femtocell, is recently introduced, which can be freely installed by a user of a mobile terminal, an operator of a store, or the like.

Such a small radio base station has a smaller communicatable area with a mobile terminal than that of an ordinary radio base station installed by a telecommunication carrier, and is installed in any location by someone other than the telecommunication carrier (e.g., in the user's home or store). That is, the telecommunication carrier is unable to exactly know the installation location of the small radio base station.

For this reason, when a mobile terminal is located in an area formed by a small radio base station, more specifically, when a location registration destination of the mobile terminal is the area of the small radio base station, there is a problem that, even if the mobile terminal sends an emergency call, an appropriate emergency report destination based on the location of the mobile terminal at the time when the emergency call is sent cannot be identified.

It is an objective of the present invention to provide a mobile communication system, a located area management device, a communication control device and a communication method which are capable of connecting an emergency call from a mobile terminal to an appropriate emergency report destination based on the location of the mobile terminal even when an installation location of a small radio base station cannot be identified.

To solve the above problems, the present invention has the following features. Specifically, a first feature of the present invention is a mobile communication system (mobile communication system 1) including a located area management device (located area management device 40) configured to manage an area (e.g., area A1) in which a mobile terminal (mobile terminal 10) is located, and a communication control device (communication control device 50) configured to control an emergency report destination (emergency report destination device 70) to which an emergency call from the mobile terminal is to be connected, according to the area in which the mobile terminal is located. In the mobile communication system, the mobile terminal sends the emergency call through one of an ordinary radio base station (radio base station 20) and a small radio base station (small radio base station 30), the ordinary radio base station forming a first area (area A1) that is a communicatable area with the mobile terminal, the small radio base station forming a second area (area A2) that is a communicatable area smaller than the first area. The located area management device includes an area information registration unit (area information registration unit 405) configured to register area information (area information TB1) when the mobile terminal is located in the second area, the area information having an ordinary area identifier (area identifier ID10) and a small area identifier (area identifier ID20) being associated with each other therein, the ordinary area identifier being for identifying the first area in which the mobile terminal has been located a predetermined time before or is to be located a predetermined time after the second area, the small area identifier being for identifying the second area, and an area information response unit (area information response unit 407) configured to refer to the area information and to notify the communication control device of the ordinary area identifier associated with the small area identifier, in response to an inquiry from the communication control device. The communication control device includes an area determination unit (area determination unit 505) configured to determine the first area corresponding to the small area identifier by making an inquiry to the located area management device about the ordinary area identifier associated with the small area identifier, based on the small area identifier contained in the emergency call, upon receipt of the emergency call from the mobile terminal located in the second area, and a communication control unit 507 configured to acquire the emergency report destination associated with the first area determined by the area determination unit, and to connect the emergency call to the emergency report destination.

According to the mobile communication system described above, when the mobile terminal is located in the second area formed by the small radio base station, the located area management device registers the area information in which at least the ordinary area identifier and the small area identifier are associated with each other, the ordinary area identifier being for identifying the first area in which the mobile terminal has been located a predetermined time before or is to be located a predetermined time after the second area, the small area identifier being for identifying the second area.

Moreover, upon receipt of the emergency call from the mobile terminal located in the second area formed by the small radio base station, the communication control device makes an inquiry to the located area management device about the ordinary area identifier of the ordinary radio base station associated with the small area identifier and determines the first area in which the mobile terminal has been located a predetermined time before or is to be located a predetermined time after the second area. Furthermore, the communication control device acquires the emergency report destination associated with the first area and connects the emergency call to the emergency report destination.

Thus, even when the small radio base station is installed in any location (e.g., in a user's home or store) by someone other than a telecommunication carrier, and the installation location of the small radio base station cannot be identified, the emergency call from the mobile terminal can be connected to an appropriate emergency report destination based on the location of the mobile terminal.

A second feature of the present invention is a located area management device used in a mobile communication system in which a mobile terminal sends an emergency call through one of an ordinary radio base station and a small radio base station, the ordinary radio base station forming a first area that is a communicatable area with the mobile terminal, the small radio base station forming a second area that is a communicatable area smaller than the first area. The located area management device includes: an area information registration unit configured to register area information when the mobile terminal is located in the second area, the area information having an ordinary area identifier and a small area identifier being associated with each other therein, the ordinary area identifier being for identifying the first area in which the mobile terminal has been located a predetermined time before or is to be located a predetermined time after the second area, the small area identifier being for identifying the second area; and an area information response unit configured to refer to the area information and to notify the communication control device of the ordinary area identifier associated with the small area identifier, in response to an inquiry from the communication control device.

A third feature of the present invention is the located area management device according to the second feature of the present invention, in which when the mobile terminal is located in the second area, the area information registration unit associates the small area identifier and the ordinary area identifier identifying the first area in which the mobile terminal has been located until just before the mobile terminal moves to the second area.

A fourth feature of the present invention is the located area management device according to the second feature of the present invention, in which the area information registration unit cancels registration of the area information when a specific one of the ordinary area identifier and a specific one of the small area identifier are already associated with each other in the area information.

A fifth feature of the present invention is the located area management device according to the second feature of the present invention, in which the area information registration unit registers the area information in which a terminal identifier (mobile terminal identifier ID30) for identifying the mobile terminal located in the second area is additionally associated with the ordinary area identifier and the small area identifier.

A sixth feature of the present invention is a communication control device used in a mobile communication system in which a mobile terminal sends an emergency call through one of an ordinary radio base station and a small radio base station, the ordinary radio base station forming a first area that is a communicatable area with the mobile terminal, the small radio base station forming a second area that is a communicatable area smaller than the first area, the communication control device being configured to control an emergency report destination to which the emergency call is to be connected. The communication control device includes: an area determination unit configured to determine the first area corresponding to the small area identifier by making an inquiry to a located area management device managing an area where the mobile terminal is located, about the ordinary area identifier associated with the small area identifier, based on the small area identifier contained in the emergency call, upon receipt of the emergency call from the mobile terminal located in the second area; and communication control unit configured to acquire the emergency report destination associated with the first area determined by the area determination unit, and to connect the emergency call to the emergency report destination.

A seventh feature of the present invention is the communication control device according to the sixth feature of the present invention, further including a small radio base station database (small radio base station DB 509) in which the small area identifier for identifying the small radio base station included in the mobile communication system is registered. Upon receipt of the emergency call from the mobile terminal, the area determination unit refers to the small radio base station database and determines whether or not the emergency call contains the small area identifier, and only when the emergency call contains the small area identifier, the area determination unit makes an inquiry to the located area management device about the ordinary area identifier associated with the small area identifier.

An eighth feature of the present invention is the communication control device according to the sixth feature of the present invention, in which the area determination unit determines the first area corresponding to the terminal identifier by making an inquiry to the located area management device about the ordinary area identifier associated with the terminal identifier based on the terminal identifier of the mobile terminal contained in the emergency call.

A ninth feature of the present invention is a communication method used in a mobile communication system in which a mobile terminal sends an emergency call through one of an ordinary radio base station and a small radio base station, the ordinary radio base station forming a first area that is a communicatable area with the mobile terminal, the small radio base station forming a second area that is a communicatable area smaller than the first area. The method includes the steps of: registering area information in a device constituting the mobile communication system when the mobile terminal is located in the second area, the area information having an ordinary area identifier and a small area identifier being associated with each other therein, the ordinary area identifier being for identifying the first area in which the mobile terminal has been located a predetermined time before or is to be located a predetermined time after the second area, the small area identifier being for identifying the second area; determine the first area corresponding to the small area identifier by making an inquiry to the device for an area where the mobile terminal is located, about the ordinary area identifier associated with the small area identifier, based on the small area identifier contained in the emergency call, upon receipt of the emergency call from the mobile terminal located in the second area; and acquiring an emergency report destination that is a connection destination of the emergency call associated with the first area determined in the determining step, and connecting the emergency call to the emergency report destination.

The features of the present invention make it possible to provide a mobile communication system, a located area management device, a communication control device and a communication method which are capable of connecting an emergency call from a mobile terminal to an appropriate emergency report destination based on the location of the mobile terminal even when an installation location of a small radio base station cannot be identified.

### BRIER DESCRIPTION OF THE DRAWINGS

[Fig. 1] Fig. 1 is an overall schematic configuration diagram of a mobile communication system 1 according to an embodiment of the present invention.
[Fig. 2] Fig. 2 is a functional block diagram of a located area management device 40 according to the embodiment of the present invention.
[Fig. 3] Fig. 3 is a functional block diagram of a communication control device 50 according to the embodiment of the present invention.
[Fig. 4] Fig. 4 is a flowchart showing an area information registration operation by the located area management device 40 according to the embodiment of the present invention.
[Fig. 5] Fig. 5 is a sequence diagram showing processing of connecting an emergency call from a mobile terminal 10 to an emergency report destination according to the embodiment of the present invention.
[Fig. 6] Fig. 6 is a table showing an example of area information TB1 to be registered in an area information DB 409 by an area information registration unit 405 according to the embodiment of the present invention.

### MODES FOR CARRYING OUT THE INVENTION

Next, an embodiment of the present invention is described. Specifically, description is given of (1) an overall schematic configuration of a mobile communication system, (2) a functional block configuration of a located area management device, (3) a functional block configuration of a communication control device, (4) operations of the mobile communication system, (5) advantageous effects, and (6) other embodiments.

Note that, in the following description of the drawings, same or similar reference signs denote same or similar elements and portions. In addition, it should be noted that the drawings are schematic and ratios of dimensions and the like are different from actual ones.

Therefore, specific dimensions and the like should be determined in consideration of the following description. Moreover, the drawings also include portions having different dimensional relationships and ratios from each other.

### (1) Overall Schematic Configuration of Mobile communication system

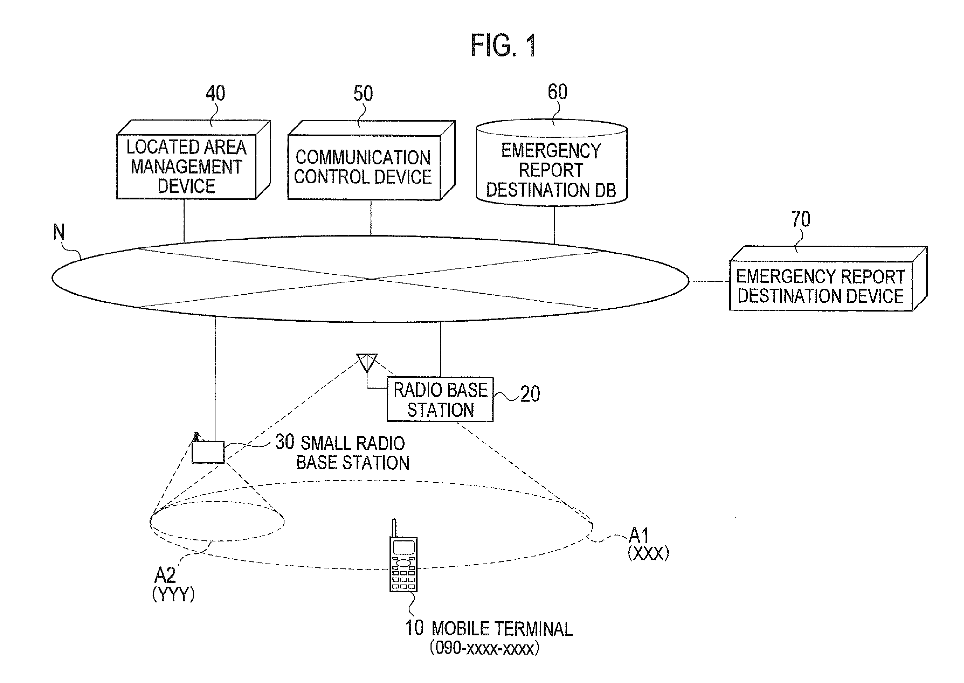

Fig. 1 is an overall schematic configuration diagram of a mobile communication system 1 according to this embodiment. As shown in Fig. 1, the mobile communication system 1 includes a radio base station 20, a small radio base station 30, a located area management device 40, a communication control device 50 and an emergency report destination DB 60. These stations, devices and DB are connected so as to be able to communicate with each other through a network N.

The radio base station 20 and the small radio base station 30 execute radio communication with a mobile terminal 10. In this embodiment, the mobile communication system 1 is a cellular phone system in accordance with the standards such as W-CDMA and Long Term Evolution (LTE).

An emergency report destination device 70 is connected to the mobile communication system 1, specifically to the network N. Specifically, the emergency report destination device 70 is an exchange or the like, which is installed in an emergency report destination (e.g., a command information center of a fire department) such as a police (110) and a fire department (119). The mobile terminal 10 can send an emergency call to the emergency report destination via the radio base station 20 or the small radio base station 30.

The radio base station 20 is a macro-cell base station installed by a telecommunication carrier constructing the mobile communication system 1. The radio base station 20 forms an area A1 (first area) that is a communicatable area with the mobile terminal 10. In this embodiment, the radio base station 20 serves as an ordinary radio base station.

The small radio base station 30 is a small radio base station (femtocell) that can be freely installed by a user of the mobile terminal 10 or the like. The small radio base station 30 forms an area A2 (second area) that is a communicatable area smaller than the area A1. The small radio base station 30 is a simple base station equipped with a radio interface in compliance with the W-CDMA or LTE standards.

The located area management device 40 manages an area (e.g., the area A1) in which the mobile terminal 10 is located. Specifically, the located area management device 40 registers the area in which the mobile terminal 10 is located, based on location registration to be executed by the mobile terminal 10 through the radio base station 20 or the small radio base station 30.

The communication control device 50 executes connection control between the mobile terminal 10 and a communication destination. Particularly, in this embodiment, the communication control device 50 executes connection control on communication (such as a voice phone call or video phone call) between the mobile terminal 10 and the emergency report destination. Specifically, the communication control device 50 controls the emergency report destination (the emergency report destination device 70) to which an emergency call from the mobile terminal 10 is to be connected, according to the area in which the mobile terminal 10 is located.

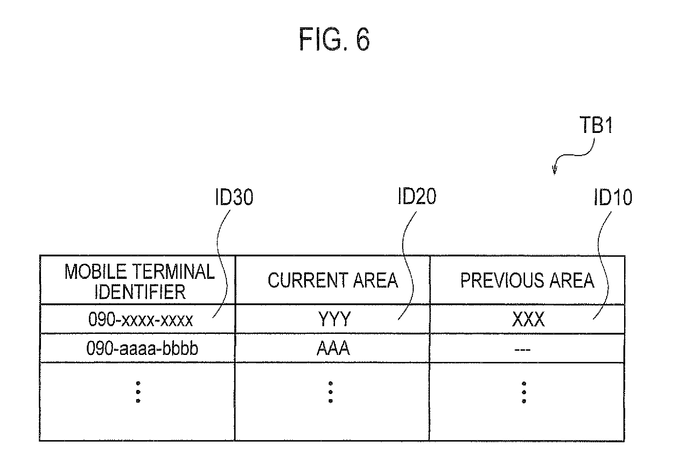

The emergency report destination DB 60 includes a database in which the emergency report destination is associated with an area identifier for identifying the area A1 formed by the radio base station 20 or the area A2 formed by the small radio base station 30, more specifically, an area identifier ID10 (see Fig. 6) for identifying a macro cell to be formed by the radio base station 20.

In this embodiment, "XXX" is assigned as the area identifier ID10 to the radio base station 20, while "YYY" is assigned as an area identifier ID20 to the small radio base station 30.

As described above, the emergency report destination device 70 is formed of the exchange or the like, which is installed in the emergency report destination such as the police (110) and the fire department (119). Specifically, a specific phone number (e.g., aa-bbbb-cccc) is assigned to the emergency report destination device 70. The communication control device 50 connects the emergency call from the mobile terminal 10 to the emergency report destination device 70 associated with the specific phone number.

### (2) Functional Block Configuration of Located area management device

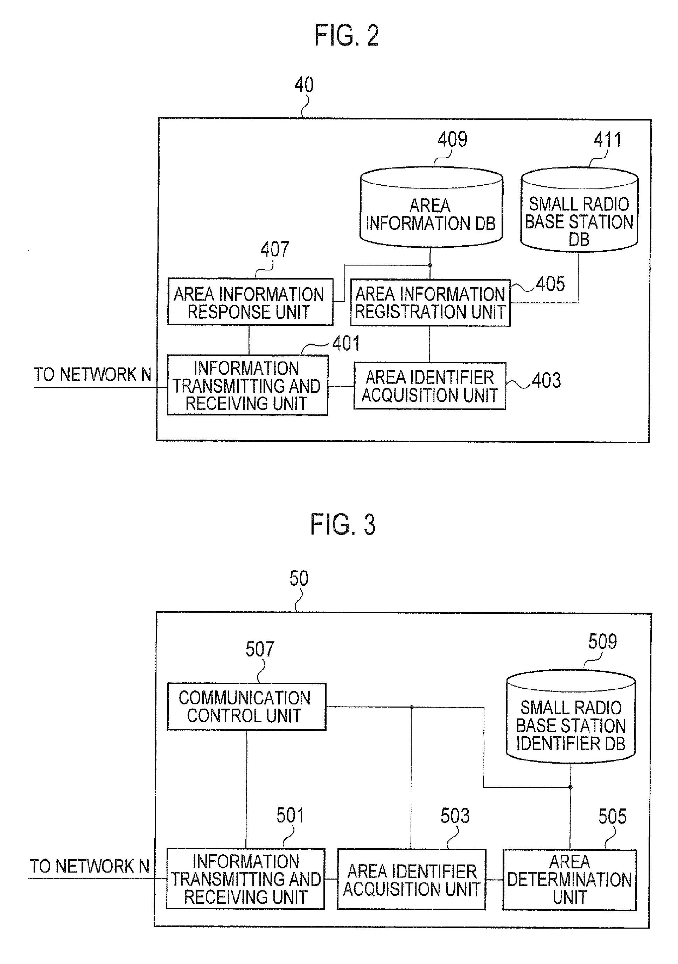

Fig. 2 is a functional block diagram of the located area management device 40. As shown in Fig. 2, the located area management device 40 includes an information transmitting and receiving unit 401, an area identifier acquisition unit 403, an area information registration unit 405, an area information response unit 407, an area information DB 409 and a small radio base station DB 411.

The information transmitting and receiving unit 401 transmits and receives various types of information to and from the network N. Specifically, the information transmitting and receiving unit 401 receives a location registration message from the mobile terminal 10 and also receives an emergency report destination area confirmation message from the communication control device 50. The information transmitting and receiving unit 401 further receives an emergency report destination area response message from the area information response unit 407, and transmits the received emergency report destination area response message to the communication control device 50.

The area identifier acquisition unit 403 acquires an area identifier contained in the location registration message received via the information transmitting and receiving unit 401, more specifically, the area identifier ID10 or the area identifier ID20 (see Fig. 6) for identifying a femtocell to be formed by the small radio base station 30.

The area information registration unit 405 registers area information in the area information DB 409 based on the area identifier acquired by the area identifier acquisition unit 403.

Fig. 6 shows an example of area information TB1 to be registered in the area information DB 409 by the area information registration unit 405. As shown in Fig. 6, when the mobile terminal 10 is located in the area A2, i.e., the femtocell formed by the small radio base station 30, the area information registration unit 405 registers the area information TB1 in which the area identifier ID10 (ordinary area identifier) for identifying the area A1 in which the mobile terminal 10 has been located a predetermined time before or is to be located a predetermined time after (e.g., 10 minutes before or 10 minutes after) in the area A2, i.e., for identifying the radio base station 20 (macro cell) is associated with the area identifier ID20 (small area identifier) for identifying the area A2.

In this embodiment, when the mobile terminal 10 is located in the area A2, the area information registration unit 405 associates the area identifier ID10 for identifying the area A1 in which the mobile terminal 10 has been located just before the area A2 with the area identifier ID20 for identifying the area A2 in which the mobile terminal 10 is currently located. As shown in Fig. 6, a mobile terminal identifier ID30 (e.g., 090-xxxx-xxxx), the area identifier ID20 (e.g., YYY) and the area identifier ID10 (XXX) are associated with each other in the area information TB1.

The mobile terminal identifier ID30 identifies the mobile terminal 10. In this embodiment, a phone number of the mobile terminal 10 is used as the mobile terminal identifier ID30 (terminal identifier). Note that, as the mobile terminal identifier ID30, information capable of uniquely identifying the mobile terminal 10 may be used, such as the IMSI (international mobile subscriber identify).

The area identifier ID20 identifies the small radio base station 30 which forms the area (area A2) in which the mobile terminal 10 is currently located. On the other hand, the area identifier ID10 identifies the area (area A1) in which the mobile terminal 10 has been located just before the area in which the mobile terminal 10 is currently located. Note that the area identifiers ID10 and ID20 are assumed to be uniquely identifiable within a single telecommunication carrier or among all telecommunication carriers, and are preferably represented by numbers or character strings which can be assigned by the telecommunication carrier.

Moreover, when the specific area identifier ID10 (e.g., XXX) and the specific area identifier ID20 (e.g., YYY) are already associated with each other in the area information TB1, the area information registration unit 405 cancels registration of new area information, i.e., registration for associating XXX with YYY, and does not update the area information TB1.

The area information response unit 407 refers to the area information TB1 registered in the area information DB 409, in response to the emergency report destination area confirmation message from the communication control device 50, and notifies the communication control device 50 of the area identifier ID10 associated with the area identifier ID20. For example, the area information response unit 407 refers to the area information TB1 and notifies the communication control device 50 of the emergency report destination area response message containing XXX associated with YYY (see Fig. 6).

The area information DB 409 manages an area information database including the area information TB1. Particularly, in this embodiment, when the area identifier contained in the location registration message is the area identifier ID20, the area information DB 409 also manages the area identifier of the area in which the mobile terminal 10 has been located just before the area formed by the small radio base station.

In the small radio base station DB 411, the area identifier ID20 for identifying the small radio base station included in the mobile communication system 1 is registered. Specifically, the small radio base station DB 411 manages the area identifier ID20 of the small radio base station connected to the network N constructing the mobile communication system 1.

### (3) Functional Block Configuration of Communication Control Device

Fig. 3 is a functional block diagram of the communication control device 50. As shown in Fig. 3, the communication control device 50 includes an information transmitting and receiving unit 501, an area identifier acquisition unit 503, an area determination unit 505, a communication control unit 507 and a small radio base station DB 509.

The information transmitting and receiving unit 501 transmits and receives various types of information to and from the network N. Specifically, the information transmitting and receiving unit 501 receives an emergency report sending message (emergency call) from the mobile terminal 10.

The information transmitting and receiving unit 501 receives an emergency report destination area confirmation message from the area determination unit 505, and transmits the received emergency report destination area confirmation message to the located area management device 40. The information transmitting and receiving unit 501 further receives an emergency report destination area response message corresponding to the emergency report destination area confirmation message from the located area management device 40.

The information transmitting and receiving unit 501 receives an emergency report destination confirmation message from the communication control unit 507, and transmits the received emergency report destination confirmation message to the emergency report destination DB 60. The information transmitting and receiving unit 501 further receives an emergency report destination response message corresponding to the emergency report destination confirmation message from the emergency report destination DB 60.

The information transmitting and receiving unit 501 receives an emergency report from the communication control unit 507, and transmits the received emergency report to the emergency report destination device 70. The information transmitting and receiving unit 501 further receives a response message corresponding to the emergency report from the emergency report destination device 70. Furthermore, the information transmitting and receiving unit 501 receives a response message from the communication control unit 507, and transmits the received response message to the mobile terminal 10.

Upon receipt of an emergency report sending message from the mobile terminal 10, the area identifier acquisition unit 503 acquires an area identifier contained in the emergency report sending message.

The area determination unit 505 accesses the small radio base station DB 509 to determine whether or not the area identifier acquired by the area identifier acquisition unit 503 is the area identifier ID20, i.e., an area identifier of the small radio base station.

Upon receipt of an emergency report sending message, i.e., an emergency call from the mobile terminal 10 located in the area A2, the area determination unit 505 makes an inquiry to the located area management device 40 about the area identifier ID10 associated with the area identifier ID20, based on the area identifier ID20 contained in the emergency report sending message. Specifically, the area determination unit 505 transmits an emergency report destination area confirmation message to the located area management device 40.

The area determination unit 505 receives an emergency report destination area response message from the located area management device 40, and determines the area A1 corresponding to the area identifier ID20 contained in the emergency report sending message, based on the area identifier ID10 of the radio base station 20 contained in the emergency report destination area response message.

In this embodiment, upon receipt of the emergency call from the mobile terminal 10, the area determination unit 505 refers to the small radio base station DB 509 and determines whether or not the emergency call contains the area identifier ID20. The area determination unit 505 makes an inquiry to the located area management device 40 about the area identifier ID10 associated with the area identifier ID20 only when the emergency call contains the area identifier ID20.

The communication control unit 507 executes connection control between the mobile terminal 10 and the communication destination. Specifically, the communication control unit 507 executes connection control on a call such as an ordinary voice phone call or video phone call. Particularly, in this embodiment, the communication control unit 507 acquires an emergency report destination associated with the area A1 determined by the area determination unit 505, and connects the emergency call from the mobile terminal 10 to the emergency report destination.

Specifically, the communication control unit 507 transmits an emergency report destination confirmation message containing a calling number (e.g., 110) of the emergency call from the mobile terminal 10 and the area identifier ID10 (XXX) for identifying the area A1 to the emergency report destination DB 60. The communication control unit 507 acquires an emergency report destination contained in the emergency report destination response message received from the emergency report destination DB 60, more specifically, the phone number (aa-bbbb-cccc) of the emergency report destination device 70.

The communication control unit 507 transmits an emergency report corresponding to the emergency report sending message from the mobile terminal 10 to the emergency report destination device 70, based on the acquired phone number of the emergency report destination device 70. The communication control unit 507 receives a response message to the emergency report from the emergency report destination device 70, and transfers the received response message to the mobile terminal 10, thereby connecting the emergency call from the mobile terminal 10 to the emergency report destination.

In the small radio base station DB 509, the area identifier ID20 for identifying the small radio base station contained in the mobile communication system 1 is registered. Specifically, the small radio base station DB 509 manages the area identifier ID20 of the small radio base station connected to the network N constructing the mobile communication system 1.

### (4) Operations of Mobile communication system

Next, operations of the mobile communication system 1 are described. Specifically, description is given of (4.1) Operation of Registering Area Information by Located area management device 40 and (4.2) Operation of Connecting Emergency Call from Mobile Terminal 10 to Emergency Report Destination.

### (4.1) Operation of Registering Area Information by Located area management device 40

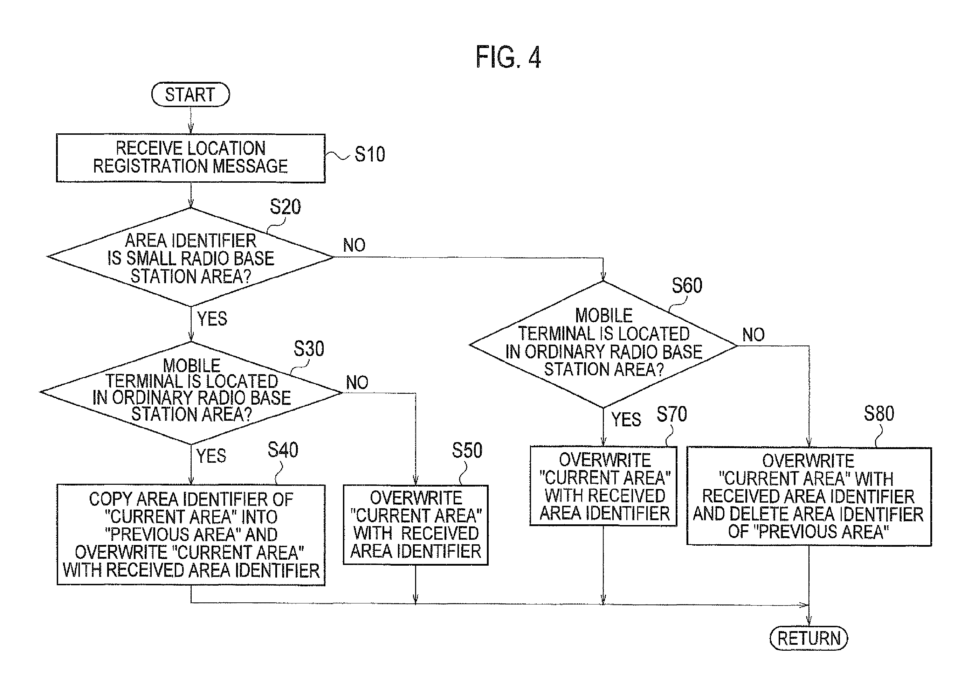

Fig. 4 shows an operation flow of registering area information by the located area management device 40. As shown in Fig. 4, the located area management device 40 receives a location registration message from the mobile terminal 10 in Step S10.

In Step S20, the located area management device 40 acquires an area identifier contained in the location registration message. The located area management device 40 accesses the small radio base station DB 411 to determine whether or not the acquired area identifier is one indicating the area of the small radio base station, i.e., the area identifier ID20.

When the area identifier is the one indicating the small radio base station (YES in Step S20), the located area management device 40 determines in Step S30 whether or not an area identifier registered as an area in which the mobile terminal 10 is located in the area information TB1 ("Current Area" in the area information TB1) is the area identifier of the ordinary radio base station (the radio base station 20). That is, the located area management device 40 determines whether or not the area in which the mobile terminal 10 has been located until the reception of the location registration message is the area of the ordinary radio base station.

When the mobile terminal 10 is located in the area of the ordinary radio base station (YES in Step S30), the located area management device 40 copies, in Step S40, the area identifier registered in "Current Area" in the area information TB1 as the area in which the mobile terminal 10 is currently located into "Previous Area" in the area information TB1. Moreover, the located area management device 40 updates the contents of the area information TB1 by overwriting "Current Area" in the area information TB1 with the area identifier contained in the location registration message received in Step S10.

When the mobile terminal 10 is not located in the area of the ordinary radio base station (NO in Step S30), i.e., when the mobile terminal 10 is located in the area of the small radio base station, the located area management device 40 updates, in Step S50, the contents of the area information TB1 by overwriting "Current Area" in the area information TB1 with the area identifier contained in the location registration message received in Step S10.

When the area identifier is not the one indicating the small radio base station (NO in Step S20), i.e., when the mobile terminal 10 is located in the area of the ordinary radio base station, the located area management device 40 determines in Step S60 whether or not the area identifier registered in "Current Area" in the area information TB1 is the area identifier ID10 that is the area identifier of the ordinary radio base station. That is, the located area management device 40 determines whether or not the area in which the mobile terminal 10 has been located until the reception of the location registration message is the area of the ordinary radio base station.

When the mobile terminal 10 is located in the area of the ordinary radio base station (YES in Step S60), the located area management device 40 updates, in Step S70, the contents of the area information TB1 by overwriting "Current Area" in the area information TB1 with the area identifier contained in the location registration message received in Step S10.

When the mobile terminal 10 is not located in the area of the ordinary radio base station (NO in Step S60), i.e., when the mobile terminal 10 is located in the area of the small radio base station, the located area management device 40 overwrites, in Step S80, "Current Area" in the area information TB1 with the area identifier contained in the location registration message received in Step S10. Also, the located area management device 40 deletes the area identifier registered in "Previous Area" in the area information TB1.

### (4.2) Operation of Connecting Emergency Call from Mobile Terminal 10 to Emergency Report Destination

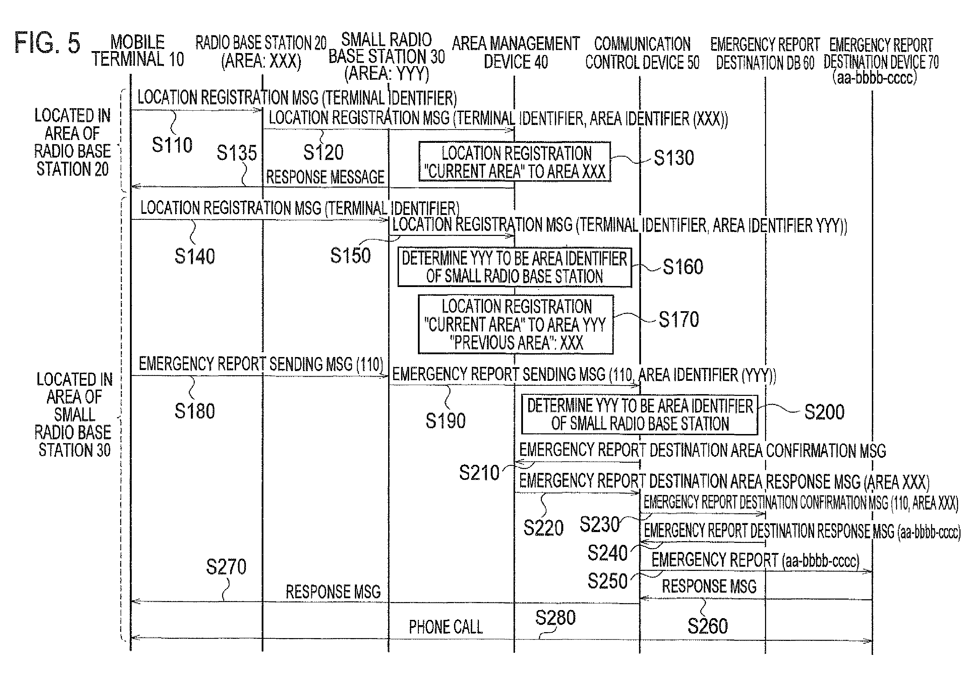

Fig. 5 shows a sequence of connection of an emergency call from the mobile terminal 10 to an emergency report destination. As shown in Fig. 5, the mobile terminal 10 transmits a location registration message to the radio base station 20 in Step S110. The location registration message transmitted by the mobile terminal 10 contains a mobile terminal identifier ID30 (terminal identifier). That is, the mobile terminal 10 needs to have its location pre-registered so that the mobile terminal can send the emergency call to the emergency report destination.

Upon receipt of the location registration message from the mobile terminal 10, the radio base station 20 adds the area identifier ID10 (XXX) of the radio base station 20 to the location registration message in Step S120. The radio base station 20 transfers to the located area management device 40 the location registration message having the area identifier ID10 (XXX) added thereto.

Upon receipt of the location registration message, the located area management device 40 executes location registration processing on the mobile terminal 10 in Step S130. Specifically, the located area management device 40 registers the area identifier ID10 (XXX) contained in the location registration message in "Current Area" in the area information TB1.

In Step S135, the located area management device 40 transmits a response message to the location registration message to the mobile terminal 10.

Thereafter, the mobile terminal 10 moves from the area A1 formed by the radio base station 20 to the area A2 formed by the small radio base station 30.

In Step S140, the mobile terminal 10 transmits a location registration message to the small radio base station 30. The location registration message transmitted by the mobile terminal 10 contains a mobile terminal identifier ID30 (terminal identifier).

Upon receipt of the location registration message from the mobile terminal 10, the small radio base station 30 adds the area identifier ID20 (YYY) of the small radio base station 30 to the location registration message in Step S150. The small radio base station 30 transfers to the located area management device 40 the location registration message having the area identifier ID20 (YYY) added thereto.

Upon receipt of the location registration message, the located area management device 40 determines in Step S160 whether or not the mobile terminal 10 is located in the area (area A2) formed by the small radio base station 30. Specifically, the located area management device 40 determines whether or not the area identifier (YYY) contained in the location registration message is the area identifier ID20.

Here, the mobile terminal 10 is assumed to be located in the area formed by the small radio base station 30.

In Step S170, the located area management device 40 copies the area identifier registered in "Current Area" in the area information TB1 as the area in which the mobile terminal 10 is currently located into "Previous Area" in the area information TB1. Moreover, the located area management device 40 registers the area identifier ID20 (YYY) contained in the location registration message in "Current Area" in the area information TB1.

In Step S180, the mobile terminal 10 sends an emergency call by dialing 110 (police), Specifically, transmits an emergency report sending message to the communication control device 50 in the state where the mobile terminal 10 is located in the area (area A2) formed by the small radio base station 30.

Upon receipt of the emergency report sending message from the mobile terminal 10, the small radio base station 30 adds the area identifier ID20 (YYY) of the small radio base station 30 to the emergency report sending message in Step S190. The small radio base station 30 transfers the emergency report sending message having the area identifier ID20 (XXX) added thereto to the located area management device 40.

Upon receipt of the emergency report sending message, the communication control device 50 determines in Step S200 whether or not the mobile terminal 10 is located in the area (area A2) formed by the small radio base station 30. Specifically, the located area management device 40 determines whether or not the area identifier (YYY) contained in the emergency report sending message is the area identifier ID20.

In Step S210, the communication control device 50 transmits an emergency report destination area confirmation message to the located area management device 40.

In Step S220, the located area management device 40 transmits an emergency report destination area response message. The emergency report destination area response message contains the area identifier ID10 (XXX) of the radio base station 20 in which the mobile terminal 10 has been located until just before the mobile terminal moves to the area (area A2) formed by the small radio base station 30.

The communication control device 50 determines the area (area A1) of the radio base station 20 corresponding to the area identifier ID20 contained in the emergency report sending message, based on the area identifier ID10 (XXX) of the radio base station 20 contained in the emergency report destination area response message.

In Step S230, the communication control device 50 transmits an emergency report destination confirmation message containing the calling number (110) of the emergency call and the area identifier ID10 (XXX) for identifying the area A1 to the emergency report destination DB 60.

In Step S240, the emergency report destination DB 60 acquires an emergency report destination associated with the area identifier ID10 (XXX), more specifically, the phone number (aa-bbbb-cccc) of the emergency report destination device 70, based on the received emergency report destination confirmation message. The emergency report destination DB 60 transmits an emergency report destination response message containing the phone number to the communication control device 50.

In Step S250, the communication control device 50 transmits an emergency report corresponding to the emergency report sending message from the mobile terminal 10 to the emergency report destination device 70, based on the phone number (aa-bbbb-cccc) of the emergency report destination device 70 contained in the emergency report destination response message.

In Step S260, the emergency report destination device 70 transmits a response message to the emergency report to the communication control device 50.

In Step S270, the communication control device 50 transfers the response message received from the emergency report destination device 70 to the mobile terminal 10. A communication path is established between the mobile terminal 10 and the emergency report destination device 70 by the processing of Step S270.

In Step S280, the mobile terminal 10 and the emergency report destination device 70 provide a voice call function using the established communication path for emergency report.

### (5) Advantageous Effects

According to the mobile communication system 1, when the mobile terminal 10 is located in the area A2 formed by the small radio base station 30, the located area management device 40 registers the area information TB1 in which the area identifier ID10 (XXX) for identifying the area A1 in which the mobile terminal 10 has been located until just before the mobile terminal moves to the area A2 is associated with the area identifier ID20 (YYY) for identifying the area A2.

Upon receipt of an emergency call from the mobile terminal 10 located in the area A2 formed by the small radio base station 30, the communication control device 50 makes an inquiry to the located area management device 40 about the area identifier ID10 of the radio base station 20 associated with the area identifier ID20 (YYY), and determines the area in which the mobile terminal 10 has been located until just before the mobile terminal moves to the area A2. Furthermore, the communication control device 50 acquires an emergency report destination associated with the area A1, and connects the emergency call to the emergency report destination.

Thus, even when the small radio base station 30 is installed in any location (e.g., in a user's home or store) by someone other than the telecommunication carrier, and the installation location of the small radio base station 30 cannot be identified, the emergency call from the mobile terminal 10 can be easily and automatically connected to an appropriate emergency report destination based on the location of the mobile terminal 10.

In this embodiment, when the specific area identifier ID10 (e.g., XXX) and the specific area identifier ID20 (e.g., YYY) are already associated with each other in the area information TB1, the located area management device 40 does not update the area information TB1 by cancelling registration of new area information, i.e., registration for associating XXX with YYY. Accordingly, the load on the located area management device 40 required for the registration processing of the area information TB1 can be reduced.

### (6) Other Embodiments

As described above, the details of the present invention have been disclosed by using the embodiment of the present invention. However, it should not be understood that the description and drawings which constitute part of this disclosure limit the present invention. From this disclosure, various alternative embodiments will be easily found by those skilled in the art.

For example, in the above embodiment of the present invention, every time the location registration is executed in accordance with the movement of the mobile terminal 10 to the area A2 formed by the small radio base station 30, the area identifier registered in "Previous Area" in the area information TB1 is updated using the area identifier ID10 of the radio base station 20 in which the mobile terminal 10 has been located until just before the mobile terminal moves to the area A2. On the other hand, when the location registration is once executed for the area A2 formed by the small radio base station 30, the area identifier registered in "Previous Area" in the area information TB1 at the time of the location registration may be continuously used while the mobile terminal is located in the area formed by the small radio base station. That is, when it is assumed that multiple small radio base stations are installed in a nearby area, processing of updating the area identifier registered in "Previous Area" described above may be omitted. Such an operation can further reduce the load on the located area management device 40 required for the registration processing of the area information TB1.

Even in the case where the area identifier once registered in "Previous Area" in the area information TB1 is continuously used without updating, the area identifier may be reset when the power of the small radio base station 30 is turned off and then turned back on or when a connection destination of the interface of the small radio base station 30 connected to the network N is changed. That is, when the power of the small radio base station 30 is turned off or when the interface is disconnected, relevant entries in the area information TB1 may be deleted. Such an operation makes it possible to always register in "Previous Area" an area including the location where the small radio base station 30 is installed or an adjacent area.

While the radio base station 20 and the small radio base station 30 respectively add the area identifier ID10 (XXX) of the radio base station 20 to the location registration message received from the mobile terminal 10 in the above embodiment, the radio base station 20 and the small radio base station 30 need not add the area identifier ID10. In this case, the area determination unit 505 in the communication control device 50 may determine the area A1 corresponding to the mobile terminal identifier ID30 by making an inquiry to the located area management device 40 about the area identifier ID10 (XXX) associated with the mobile terminal identifier ID30, based on the mobile terminal identifier ID30 of the mobile terminal 10 contained in the emergency report sending message (emergency call) from the mobile terminal 10.

In the above embodiment, for each mobile terminal 10, "Current Area" in which the mobile terminal 10 is currently located and "Previous Area" in which the mobile terminal 10 is previously located are registered in the area information TB1. On the other hand, a combination of the area identifier In20 of the small radio base station 30 and the area identifier ID10 of the radio base station 20 including the area A2 formed by the small radio base station 30 or adjacent to the area A2 may be managed.

That is, the located area management device 40 may manage, besides the area information TB1, a combination of the area identifier ID20 of the small radio base station 30 and the area identifier ID10 of the radio base station 20 adjacent to the area A2. The located area management device 40 can manage the combination by learning a history registered in the area information TB1. Such an operation can reduce an amount of data registered in the area information TB1.

In the above embodiment, the emergency report destination is determined based on the area identifier registered in "Previous Area" in the area information TB1. On the other hand, if the mobile terminal 10 is located in the area A2 formed by the small radio base station 30 for a long period of time, such as late at night, a GPS (Global Positioning System) of the mobile terminal 10 may be activated through the network N to acquire a detailed installation location of the small radio base station 30.

In the above embodiment, the emergency report destination is determined based on the area identifier ID10 of the radio base station 20 in which the mobile terminal 10 has been located until just before the mobile terminal moves to the area A2 formed by the small radio base station 30. On the other hand, the emergency report destination may be determined based on the area identifier ID10 of the radio base station 20 in which the mobile terminal 10 is located "just after" the area A2. That is, the emergency report destination may be determined based on the area identifier ID10 after the mobile terminal 10 moves from the area A2 to the area A1 formed by the radio base station 20.

While the located area management device 40 and the communication control device 50 are connected to the network N as separate devices in the above embodiment, the located area management device 40 and the communication control device 50 may be integrated. Such an integrated device makes it possible to reduce an amount of messages transmitted and received through the network N, and to assemble the small radio base station DB 411 and the small radio base station DB 509. Moreover, any one of the located area management device 40 and the communication control device 50 may include the small radio base station database.

While the small radio base station 30 is a simple base station equipped with the radio interface in compliance with the W-CDMA or LTE standards in the above embodiment, the small radio base station 30 may be a simple base station equipped with a radio interface such as a wireless LAN.

As described above, the present invention naturally includes various embodiments which are not described herein. Accordingly, the technical scope of the present invention should be determined only by the matters to define the invention in the scope of claims regarded as appropriate based on the description.

It should be noted that the entire content of Japanese Patent Application No. 2008-285817 (filed on November 6, 2008) is incorporated herein by reference.

### INDUSTRIAL APPLICABILITY

As described above, the mobile communication system, the located area management device, the communication control device and the communication method according to the present invention make it possible to connect an emergency call from a mobile terminal to an appropriate emergency report destination based on the location of the mobile terminal even when an installation location of a small radio base station cannot be identified.

## Claims

1. A mobile communication system comprising:
a located area management device configured to manage an area in which a mobile terminal is located; and
a communication control device configured to control an emergency report destination to which an emergency call from the mobile terminal is to be connected, according to the area in which the mobile terminal is located,
the mobile terminal sending the emergency call through one of an ordinary radio base station and a small radio base station, the ordinary radio base station forming a first area that is a communicatable area with the mobile terminal, the small radio base station forming a second area that is a communicatable area smaller than the first area, wherein
the located area management device includes:
an area information registration unit configured to register area information when the mobile terminal is located in the second area, the area information having an ordinary area identifier and a small area identifier being associated with each other therein, the ordinary area identifier being for identifying the first area in which the mobile terminal has been located a predetermined time before or is to be located a predetermined time after the second area, the small area identifier being for identifying the second area; and
an area information response unit configured to refer to the area information and to notify the communication control device of the ordinary area identifier associated with the small area identifier, in response to an inquiry from the communication control device,
and
the communication control device includes:
an area determination unit configured to determine the first area corresponding to the small area identifier by making an inquiry to the located area management device about the ordinary area identifier associated with the small area identifier, based on the small area identifier contained in the emergency call, upon receipt of the emergency call from the mobile terminal located in the second area; and
a communication control unit configured to acquire the emergency report destination associated with the first area determined by the area determination unit, and to connect the emergency call to the emergency report destination.

2. A located area management device used in a mobile communication system in which a mobile terminal sends an emergency call through one of an ordinary radio base station and a small radio base station, the ordinary radio base station forming a first area that is a communicatable area with the mobile terminal, the small radio base station forming a second area that is a communicatable area smaller than the first area,
the located area management device comprising:
an area information registration unit configured to register area information when the mobile terminal is located in the second area, the area information having an ordinary area identifier and a small area identifier being associated with each other therein, the ordinary area identifier being for identifying the first area in which the mobile terminal has been located a predetermined time before or is to be located a predetermined time after the second area, the small area identifier being for identifying the second area; and
an area information response unit configured to refer to the area information and to notify the communication control device of the ordinary area identifier associated with the small area identifier, in response to an inquiry from the communication control device.

3. The located area management device according to claim 2, wherein
when the mobile terminal is located in the second area, the area information registration unit associates the small area identifier and the ordinary area identifier identifying the first area in which the mobile terminal has been located until just before the mobile terminal moves to the second area.

4. The located area management device according to claim 2, wherein
the area information registration unit cancels registration of the area information when a specific one of the ordinary area identifier and a specific one of the small area identifier are already associated with each other in the area information.

5. The located area management device according to claim 2, wherein
the area information registration unit registers the area information in which a terminal identifier for identifying the mobile terminal located in the second area is additionally associated with the ordinary area identifier and the small area identifier.

6. A communication control device used in a mobile communication system in which a mobile terminal sends an emergency call through one of an ordinary radio base station and a small radio base station, the ordinary radio base station forming a first area that is a communicatable area with the mobile terminal, the small radio base station forming a second area that is a communicatable area smaller than the first area, the communication control device being configured to control an emergency report destination to which the emergency call is to be connected,
the communication control device comprising:
an area determination unit configured to determine the first area corresponding to the small area identifier by making an inquiry to a located area management device managing an area where the mobile terminal is located, about the ordinary area identifier associated with the small area identifier, based on the small area identifier contained in the emergency call, upon receipt of the emergency call from the mobile terminal located in the second area; and
a communication control unit configured to acquire the emergency report destination associated with the first area determined by the area determination unit, and to connect the emergency call to the emergency report destination.

7. The communication control device according to claim 6, further comprising:
a small radio base station database in which the small area identifier for identifying the small radio base station included in the mobile communication system is registered, wherein
upon receipt of the emergency call from the mobile terminal, the area determination unit refers to the small radio base station database and determines whether or not the emergency call contains the small area identifier, and
only when the emergency call contains the small area identifier, the area determination unit makes an inquiry to the located area management device about the ordinary area identifier associated with the small area identifier.

8. The communication control device according to claim 6, wherein
the area determination unit determines the first area corresponding to the terminal identifier by making an inquiry to the located area management device about the ordinary area identifier associated with the terminal identifier based on the terminal identifier of the mobile terminal contained in the emergency call.

9. A communication method used in a mobile communication system in which a mobile terminal sends an emergency call through one of an ordinary radio base station and a small radio base station, the ordinary radio base station forming a first area that is a communicatable area with the mobile terminal, the small radio base station forming a second area that is a communicatable area smaller than the first area,
the method comprising the steps of:
registering area information in a device constituting the mobile communication system when the mobile terminal is located in the second area, the area information having an ordinary area identifier and a small area identifier being associated with each other therein, the ordinary area identifier being for identifying the first area in which the mobile terminal has been located a predetermined time before or is to be located a predetermined time after the second area, the small area identifier being for identifying the second area;
determine the first area corresponding to the small area identifier by making an inquiry to the device for an area where the mobile terminal is located, about the ordinary area identifier associated with the small area identifier, based on the small area identifier contained in the emergency call, upon receipt of the emergency call from the mobile terminal located in the second area; and
acquiring an emergency report destination that is a connection destination of the emergency call associated with the first area determined in the determining step, and connecting the emergency call to the emergency report destination.
